(19) Europäisches Patentamt

European Patent Office

Office européen des brevets

(11) EP 0 863 387 A2

## (12) EUROPÄISCHE PATENTANMELDUNG

(43) Veröffentlichungstag:
09.09.1998 Patentblatt 1998/37

(51) Int. Cl.⁶: $G01G\ 13/285$

(21) Anmeldenummer: 98102489.6

(22) Anmeldetag: 13.02.1998

(84) Benannte Vertragsstaaten:
AT BE CH DE DK ES FI FR GB GR IE IT LI LU MC NL PT SE
Benannte Erstreckungsstaaten:
AL LT LV MK RO SI

(30) Priorität: 04.03.1997 DE 19708564

(71) Anmelder: MESSER GRIESHEIM GMBH
60547 Frankfurt (DE)

(72) Erfinder: Hermeling, Werner
7100 Neusiedl am See (AT)

(54) **Verfahren zur Kontrolle des Füllprozesses von Druckgasbehältern**

(57) Das Verfahren zur Kontrolle eines Füllprozesses durch Wiegen ist dadurch gekennzeichnet, daß in regelmäßigen Abständen der Wert der Füllmassenänderung pro Zeitintervall oder dessen reziproker Wert bestimmt und mit einem Sollwert verglichen und bei Abweichung der Werte über einen Toleranzwert der Füllprozeß unterbrochen wird. Das Verfahren wird beispielsweise bei der Befüllung von Druckgasflaschen mit einem Gas wie Kohlendioxid eingesetzt.

Printed by Xerox (UK) Business Services
2.16.3/3.4

**Beschreibung**

Die Erfindung betrifft ein Verfahren zur Kontrolle des Füllprozesses von Druckgasbehältern mit Gas.

Es gibt Füllprozesse, die aus sicherheitstechnischen Gründen eine besondere Sorgfalt verlangen. So stellen beispielsweise überfüllte $CO_2$-Flaschen ein großes sicherheitstechnisches Risiko dar. Um dieses Risiko auszuschließen, werden die Flaschen nach der Befüllung ein zweites Mal gewogen. Bei diesem Verfahren ist jedoch die Möglichkeit subjektiver Fehler nicht auszuschließen. Deshalb hat man "selbstkontrollierende" Regelsysteme entwickelt. Diese beinhalten nach wie vor ein Restrisiko. Stellt sich beispielsweise bei der letzten Wägung ein Fehler in der Elektronik ein, kann dieser nicht erkannt werden.

Bei bekannten Verfahren, z. B. DE 195 09 436 A1, wird die Befüllung von Druckgasbehältern anhand von vorher erstellten Füllkurven kontrolliert. Der Füllprozeß wird abgebrochen, wenn von einem Rechner erfaßte Massenänderungen außerhalb eines vorher fixierten Toleranzfeldes von der Füllkurve fallen. Problematisch bei diesem Verfahren ist, daß in den seltensten Fällen die Füllkurve reproduzierbar ist. Sie ändert sich beispielsweise durch unterschiedliche Durchflußwiderstände der Einbauten (Flaschenventile), durch verschleißbedingten Leistungsabfall der Pumpen, durch unterschiedliche Betriebszustände des Fördermediums.

Die Aufgabe der Erfindung besteht in der Bereitstellung eines Kontrollverfahrens bei der Befüllung von Druckgasbehältern, das verläßlich Fehler bei der Befüllung unabhängig von der Eigenart und dem Zustand der Druckgasbehälter und von Anlageneinflüssen erkennt.

Die Aufgabe wurde gelöst durch ein Verfahren zur Kontrolle eines Füllprozesses, bei dem in regelmäßigen Abständen der Wert der Füllmassenänderung in einem Zeitintervall bestimmt wird, der Grundlage für einen Vergleich mit einem Sollwert ist, und bei Abweichung von dem Sollwert über einen Toleranzwert der Füllprozeß unterbrochen wird.

Bei dem Verfahren zur Kontrolle eines Füllprozesses wird beispielsweise ständig der Quotient aus Massendifferenz und Zeitdifferenz als Istwert bestimmt und mit dem Wert des vorhergegangenen oder prognostizierten Wertes, dem Sollwert, verglichen. Bei Abweichung über eine Toleranzschwelle (Toleranzwert) hinaus wird der Füllprozeß abgebrochen. Liegt die Abweichung innerhalb des Toleranzwertes, wird der Füllprozeß fortgesetzt bis die eingefüllte Masse (Füllmasse) einen vorgegebenen Sollwert (Endfüllmasse) erreicht hat. Überfüllungen sind somit mit völliger Sicherheit ausgeschlossen.

Bei der Befüllung von Behältern nimmt unter anderem die Masse in Abhängigkeit von der Zeit zu. Die Massenänderung ist vom Füllsystem, der Art der Befüllung und verschiedenen weiteren systemeigenen Komponenten abhängig.

Der zu bestimmende Quotient $Q_n$ (Massendifferenz pro Zeitintervall) als Regelgröße (Istwert der n. Bestimmung) oder der reziproke Quotient $q_n$ als Regelgröße können online mit Hilfe eines Computers erfaßt und zur automatischen Regelung genutzt werden. Der Quotient $Q_n$ oder der reziproke Quotient $q_n$ werden berechnet nach:

$$Q_n = (M_n - M_{n-1}) / (t_n - t_{n-1}) \leq T \text{ oder } q_n = 1/Q_n = (t_n - t_{n-1}) / (M_n - M_{n-1}) \geq T,$$

wobei $M_n$ die Masse zum Zeitpunkt $t_n$, $M_{n-1}$ die Masse zum Zeitpunkt $t_{n-1}$, $Q_n$ errechneter Quotient aus Massenänderung pro Zeitintervall $(t_n - t_{n-1})$, $q_n$ reziproker Quotient, T Toleranzwert und n die Nummer des Meßintervalles (Anzahl der durchgeführten Kontrollen) bedeuten.

Die Regelung bei Zeitintervallen von konstanter Dauer kann auch anhand des Wertes der Massenänderung, bezogen auf das Zeitintervall, als Regelgröße erfolgen, ohne daß explizit der Quotient $Q_n$ oder der reziproke Quotient $q_n$ berechnet werden.

Die Zeitintervalle liegen im allgemeinen im Bereich von 1 Millisekunde bis 5 Minuten, bevorzugt im Bereich von 1 Millisekunde bis 1 Sekunde und besonders bevorzugt im Bereich von 1 Millisekunde bis 100 Millisekunden. Die Massenänderungen werden in direkt aufeinanderfolgenden Zeitintervallen (ohne Pause) oder in regelmäßigen Zeitabständen (Pause zwischen den Messungen) bestimmt. Diese Zeitabstände zwischen den Zeitintervallen für die Bestimmung der Massenänderung können im Bereich von 1 Millisekunde bis 1 Minute liegen, bevorzugt 1 Millisekunde bis 1 Sekunde und besonders bevorzugt 10 bis 100 Millisekunden. Der Vergleich der Massenänderung pro Zeitintervall beginnt mit der Messung der Massenänderung des zweiten Zeitintervalls. Weicht die Massenänderung in dem zuletzt bestimmten Zeitintervall von der Massenänderung des vorletzten Zeitintervalls um mehr als einen vorher definierten Toleranzwert (Toleranzschwelle) ab, dann wird der Füllprozeß sofort abgebrochen, die Anlage schaltet auf Störung. Die Toleranzschwelle ist ein fest eingegebener Wert, der zum Beispiel bei 10% der erwarteten Massenänderung liegt.

Es werden alle Störungen, egal ob elektrischer, elektronischer oder mechanischer Art, innerhalb von 2 Zeitintervallen erkannt. Da diese Zeitintervalle und die Abstände zwischen den Zeitintervallen vorzugsweise im Millisekunden-Bereich liegen, kann man von einer kontinuierlichen Kontrolle des Füllprozesses sprechen.

Das System erkennt nicht nur Fehler im Wägesystem, sondern alle Fehler, die ein plötzliches Ändern des Förderstroms zur Folge haben, z. B. Störungen an der Pumpe.

Das Verfahren erfordert keine anlagetechnischen Mehraufwendungen, sondern wird über die Änderung der Software bei computergesteuerten Anlagen realisiert.

Das erfindungsgemäße Verfahren dient in erster Linie für das Befüllen von Druckgasbehältern mit Gas. Das Verfahren ist für alle Verfahren geeignet, bei denen die Massenänderung die Regelgröße ist, so zum Beispiel bei allen gravimetrischen Gasabfüllungen von Gasen wie Kohlendioxid ($CO_2$), Argon, Stickstoff oder von Gasgemischen. Das Verfahren läßt sich sinngemäß auch für jeden anderen Füllprozeß (z. B. gravimetrisches Abfüllen von Gasen, Flüssigkeiten oder Feststoffen) anwenden.

Die Erfindung wird nachfolgend anhand des Beispieles der Befüllung einer Druckgasflasche mit $CO_2$ beschrieben.

Wird die Druckgasflasche mit einem EDV-gesteuerten Füllsystem gefüllt, erhält der Rechner bestimmte Primärdaten, unter anderem auch die zu befüllende Gasmenge. Der erforderliche Fülldruck steht an. Die Gasflasche steht auf einer Waage, welche mit dem Rechner kommuniziert. Der Füllprozeß kann gestartet werden. Erfindungsgemäß wird in vorher definierten Zeitintervallen die eingefüllte Menge oder Massenänderung abgefragt. Das Zeitintervall beträgt beispielsweise 100 Millisekunden und der Zeitabstand zwischen den Messungen 10 Millisekunden. Für die Füllmasse wird vor dem Start der Befüllung der Sollwert der Endfüllmasse festgelegt. Das Leergewicht des Druckgasbehälters wird bestimmt und wird vom Rechner mit dem vorher abgespeicherten Flaschengewicht verglichen. Beide Gewichte sind identisch. Die Befüllung mit $CO_2$ beginnt, gleichzeitig wird der Zeitpunkt des Startes registriert. Nach 10 Millisekunden nach dem Start beginnt die erste Messung der Massenänderung in dem Zeitintervall von 100 Millisekunden. Es wird für die erste Messung die Massenänderung pro Zeiteinheit berechnet, dieser Wert wird als $Q_1$ bezeichnet. Nach weiteren 10 Millisekunden wird die zweite Messung der Massenänderung in dem Zeitintervall von 100 Millisekunden durchgeführt. Es wird für die zweite Messung die Massenänderung pro Zeiteinheit berechnet, dieser Wert wird als $Q_2$ bezeichnet. Von dem Rechner wird die Differenz $D_{1,2}$ der Werte $Q_1$ und $Q_2$ berechnet. Der Rechner prüft, ob die Differenz $D_{1,2}$ im vorgegebenen Toleranzfeld (T) liegt. Ist der Absolutbetrag von $D_{1,2}$ kleiner als T und die aktuelle Füllmasse kleiner als der Sollwert der Endfüllmasse, so werden Füllprozeß und Kontrollverfahren analog fortgesetzt.

Zur Kontrolle der Befüllung kann auch der reziproke Quotient $q_n$ oder der Wert der Massenänderung in einem Zeitintervall herangezogen werden.

**Patentansprüche**

1.  Verfahren zur Kontrolle eines Füllprozesses,
    dadurch gekennzeichnet,
    daß in regelmäßigen Abständen der Wert der Füllmassenänderung in einem Zeitintervall bestimmt wird, der Grundlage für einen Vergleich mit einem Sollwert ist, und bei Abweichung von dem Sollwert über einen Toleranzwert der Füllprozeß unterbrochen wird.

2.  Verfahren gemäß Anspruch 1,
    dadurch gekennzeichnet,
    daß in regelmäßigen Abständen der Wert der Füllmassenänderung pro Zeitintervall oder dessen reziproker Wert bestimmt und mit einem Sollwert verglichen und bei Abweichung der Werte über einen Toleranzwert der Füllprozeß unterbrochen wird.

3.  Verfahren gemäß Anspruch 1 oder 2,
    dadurch gekennzeichnet,
    daß der Sollwert dem Wert der Füllmassenänderung pro Zeitintervall oder dessen reziproker Wert der vorhergegangenen Bestimmung entspricht.

4.  Verfahren gemäß einem der Ansprüche 1 bis 3,
    dadurch gekennzeichnet,
    daß der Sollwert einem prognostizierten Wert entspricht.

5.  Verfahren nach einem der Ansprüche 1 bis 4,
    dadurch gekennzeichnet,
    daß bei dem Füllprozeß ein Gas, eine Flüssigkeit, oder ein Feststoff abgefüllt wird.

6.  Verfahren nach einem der Ansprüche 1 bis 5,
    dadurch gekennzeichnet,
    daß bei dem Füllprozeß ein Gas oder Gasgemisch in einen Druckgasbehälter gefüllt wird.

7.  Verfahren nach einem der Ansprüche 1 bis 6,
    dadurch gekennzeichnet,

daß bei dem Füllprozeß Kohlendioxid in einen Druckgasbehälter gefüllt wird.

8. Verfahren nach einem der Ansprüche 1 bis 7,
   dadurch gekennzeichnet,
   daß der Füllprozeß online mit Hilfe eines Computers gesteuert wird.

9. Verfahren nach einem der Ansprüche 1 bis 8,
   dadurch gekennzeichnet,
   daß das Zeitintervall für die Bestimmung der Füllmassenänderung und die Zeitabstände zwischen den Bestimmungen im Bereich von jeweils 1 bis 100 Millisekunden liegt.